# EUROPÄISCHE PATENTSCHRIFT

(11) **EP 2 651 609 B1**
(45) Veröffentlichungstag und Bekanntmachung des Hinweises auf die Patenterteilung: **25.02.2015**
(21) Anmeldenummer: 11794158.3
(22) Anmeldetag: 09.12.2011
(51) Int. Cl.: B25J 15/08

(54) **SCHUTZEINRICHTUNG FÜR EINE GREIFEINRICHTUNG AN EINER HANDHABUNGSVORRICHTUNG, INSBESONDERE EINEM HANDHABUNGSROBOTER**
PROTECTION DEVICE FOR A GRIPPING DEVICE FOR A MANIPULATOR, IN PARTICULAR A HANDLING ROBOT
DISPOSITIF DE PROTECTION POUR UN DISPOSITIF DE PRÉHENSION D'UN MANIPULATEUR, EN PARTICULIER UN ROBOT MANIPULATEUR

(30) Priorität: 16.12.2010 DE 102010063202
(43) Veröffentlichungstag der Anmeldung: 23.10.2013
(73) Patentinhaber: Robert Bosch GmbH, 70442 Stuttgart (DE)
(72) Erfinder: SCHLAICH, Peter, 71229 Leonberg (DE); RUEB, Andreas, 71679 Asperg (DE); FRANGEN, Joachim, 74081 Heilbronn (DE)
(86) Internationale Anmeldenummer: PCT/EP2011/072340
(87) Internationale Veröffentlichungsnummer: WO 2012/080131

(56) Entgegenhaltungen:
- EP-A1- 1 424 174
- DE-A1-102008 023 813
- DE-U1- 20 314 896
- US-B1- 6 523 875

## Beschreibung

### Stand der Technik

Die Erfindung betrifft eine Schutzeinrichtung für eine Greifeinrichtung an einer Handhabungsvorrichtung, insbesondere einem Handhabungsroboter, nach dem Oberbegriff des Anspruchs 1.

Eine derartige Schutzeinrichtung ist aus DE 203 14 896 U1 bekannt. Bei der bekannten Schutzeinrichtung ist an einem Greifarm der Handhabungsvorrichtung ein aus Rohren zusammengesetztes Gestell angeordnet, das Greif- bzw. Spannelemente zum Greifen von Werkstücken oder ähnlichem aufweist. Dabei ist es vorgesehen, dass beim Auftreten einer Überlast mittels sogenannter Auslenksicherungen ein Ausweichen der Greif- bzw. Spannelemente erfolgt. Die Auslenksicherungen sind hierbei als kraftschlüssig wirkende Rastelemente, insbesondere in Form von federbelasteten Rastkugeln, ausgebildet. Wesentlich hierbei ist, dass ein Ausweichen bzw. ein Ansprechen der Auslenksicherungen auch dann erfolgt, wenn eine Kraftbeanspruchung bzw. eine zu große Last aus einer Richtung erfolgt, die zum Greifen des Werkstückes oder ähnlichem erforderlich ist. Dadurch kann es beispielsweise zum Herabfallen des Gegenstandes mit entsprechenden Schäden bzw. potentieller Gefahr einer Verletzung eines im Aktionsradius der Greifeinrichtung befindlichen Bedieners kommen.

### Offenbarung der Erfindung

Ausgehend von dem dargestellten Stand der Technik liegt der Erfindung die Aufgabe zugrunde, eine Schutzeinrichtung für eine Greifeinrichtung an einer Handhabungsvorrichtung nach dem Oberbegriff des Anspruchs 1 derart weiterzubilden, dass zwar einerseits ein Ausweichen der Greifeinrichtung beim Auftreten zu großer Kräfte bzw. im Kollisionsfall möglich ist, dass aber andererseits ein Ausweichen vorzugsweise nur dann erfolgt, wenn die Kollision bzw. die zu hohe Kraft aus einer Richtung erfolgt, die für die Funktion der Greifeinrichtung nicht wesentlich bzw. erforderlich ist. Diese Aufgabe wird bei einer Schutzeinrichtung für eine Greifeinrichtung an einer Handhabungsvorrichtung mit den Merkmalen des Anspruchs 1 gelöst. Der Erfindung liegt dabei die Idee zugrunde, die Schutzeinrichtung derart auszulegen, dass eine Überlastsicherung lediglich bei einer bzw. mehreren Kräften anspricht, die aus einer Richtung erfolgen, die außerhalb der für das Greifen erforderlichen Kraftrichtung verlaufen. Dadurch wird bei Reduzierung der im Kollisionsfall auf das Kollisionsobjekt wirkenden Kräfte insbesondere ein Herabfallen eines zu greifenden bzw. von der Greifeinrichtung gehaltenen Gegenstandes vermieden.

Vorteilhafte Weiterbildungen der erfindungsgemäßen Schutzeinrichtung für eine Greifeinrichtung sind in den Unteransprüchen angegeben. In den Rahmen der Erfindung fallen sämtliche Kombinationen aus zumindest zwei von in den Ansprüchen der Beschreibung und/oder den Figuren offenbarten Merkmalen.

Als Greiforgane können dabei beispielsweise Greiffinger dienen, wobei in einer bevorzugten Ausgestaltung der Erfindung vorgesehen ist, dass jedes der Greiforgane eine Überlastsicherung aufweist, und dass die Überlastsicherung als kraftschlüssige Überlastsicherung ausgebildet ist. Dadurch wird eine sichere und zuverlässige Funktion der Schutzeinrichtung bei überschaubarem konstruktiven Aufwand sichergestellt.

Ganz besonders bevorzugt ist es, dass die Überlastsicherung wenigstens ein federbelastetes Element umfasst, und dass das Element bei einem Ansprechen der Überlastsicherung eine aktive Bewegung des Greiforgans in seine Auslenkrichtung bewirkt. Mit anderen Worten gesagt bedeutet dies, dass im Auftreten eines Kollisionsfalles die Überlastsicherung eine Beschleunigung des Greiforgans in eine Richtung bewirkt, die entgegen der Kollisionsrichtung ist Dadurch wird die Beschädigungsgefahr bzw. Verletzungsgefahr im Kollisionsfall zusätzlich vermindert.

In einer weiteren Ausgestaltung der Erfindung ist es vorgesehen, dass der Übertragungsmechanismus für die Greiforgane wenigstens eine gemeinsame Antriebswelle umfasst, und dass eine weitere Überlastsicherung mit einem federbelasteten Element in Form eines Druckstücks vorgesehen ist, das mit der wenigstens einen gemeinsamen Antriebswelle zusammenwirkt, und das ein Ausweichen der wenigstens einen Antriebswelle in Längsrichtung bewirkt.

Alternativ kann es auch vorgesehen sein, dass der Übertragungsmechanismus für die Greiforgane für jedes Greiforgan eine separate Antriebswelle umfasst, und dass jede separate Antriebswelle eine weitere Überlastsicherung mit einem federbelasteten Element in Form eines Druckstücks aufweist, das ein Ausweichen der separaten Antriebswelle in Längsrichtung bewirkt. Dadurch wird ein selektives Ansprechen bzw. Ausweichen einzelner Greiforgane bewirkt.

Besonders bevorzugt ist es weiterhin, dass die Überlastsicherung wenigstens ein Sensorelement umfasst, das beim Ansprechen der Überlastsicherung ein entsprechendes Signal erzeugt Mittels eines derartigen Sensorelements lässt sich dann beispielsweise der Betrieb der Handhabungsvorrichtung stoppen bzw. ein entsprechendes Alarmsignal an eine Steuereinrichtung ausgeben.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine Greifeinrichtung einer Handhabungsvorrichtung in einer vereinfachten, perspektivischen Ansicht,
- Fig. 2: einen einzelnen Greiffinger der Greifeinrichtung gemäß der Fig. 1 in einer perspektivischen Ansicht,
- Fig. 3: eine Draufsicht auf einen gegenüber der Fig. 2 modifizierten Greiffinger,
- Fig. 4: einen Schnitt in der Ebene IV-IV der Fig. 3,
- Fig. 5: einen Schnitt in der Ebene V-V der Fig. 3,
- Fig. 6: den Greiffinger gemäß Fig. 2 in einer Seitenansicht,
- Fig. 7: einen Schnitt in der Ebene VII-VII der Fig. 6,
- Fig. 8: einen Schnitt in der Ebene VIII-VIII der Fig. 6 und
- Fig. 9: einen vereinfachten Schnitt durch eine modifizierte Greifeinrichtung ge mäß der Fig. 1 im Bereich des Getriebes.

Gleiche Bauteile bzw. Bauteile mit gleicher Funktion sind in den Figuren mit denselben Bezugsziffem versehen.

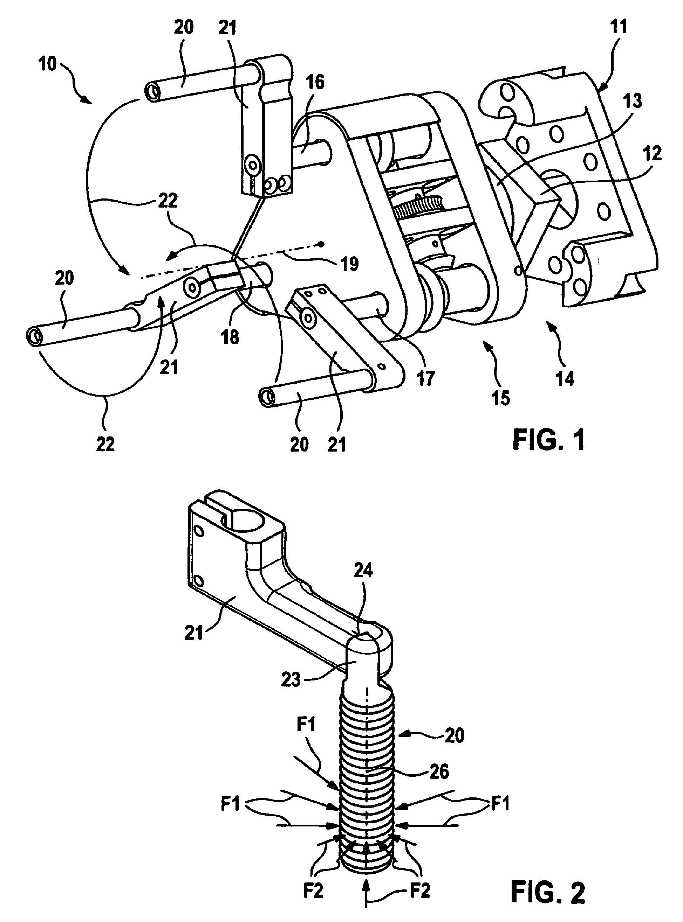

In der Fig. 1 ist eine Greifeinrichtung 10 dargestellt, wie sie insbesondere Bestandteil einer Handhabungsvorrichtung in Form eines Handhabungsroboters ist. Hierbei ist die Greifeinrichtung 10 an einem nicht dargestellten, bewegbaren Arm der Handhabungsvorrichtung angeordnet, dessen der Greifeinrichtung 10 zugewandtes Ende eine Trägerplatte 11 trägt. An der Trägerplatte 11 ist eine Steuerelektronik 12 sowie ein Antriebsmotor 13 befestigt. Der Antriebsmotor 13 als Teil des Übertragungsmechanismus 14 wirkt über ein Getriebe 15 auf drei Antriebswellen 16 bis 18. Die drei Antriebswellen 16 bis 18 sind in gleichmäßigen Winkelabständen auf einem Teilkreis zu einer Längsachse 19 der Greifeinrichtung 10 parallel zueinander angeordnet. Jeder der Antriebswellen 16 bis 18 ist ein Greiffinger 20 zugeordnet, der über eine Schwenkbacke 21 drehfest mit der jeweiligen Antriebswelle 16 bis 18 verbunden ist. Die drei Antriebswellen 16 bis 18 und somit auch die Greiffinger 20 sind synchron entsprechend der Pfeile 22 entgegen dem Uhrzeigersinn drehbar, um insbesondere einen zylindrisch ausgebildeten, in den Figuren nicht dargestellten Körper bzw. Gegenstand greifen zu können, wobei dieser beim Halten durch die Greiffinger 20 zur Längsachse 19 zentriert ist.

Ergänzend wird erwähnt, dass die Erfindung nicht auf Greifeinrichtungen 10 mit drei Greiffingem 20 beschränkt sein soll. Vielmehr ist es auch denkbar, Greifeinrichtungen 10 mit zwei, oder aber mit mehr als drei Greiffingem 20 vorzusehen.

In der Fig. 2 ist ein einzelner, an der Schwenkbacke 21 befestigter Greiffinger 20 bei einer ersten Ausführungsform der Erfindung vergrößert dargestellt Insbesondere erkennt man, dass der Greiffinger 20 an seiner der Schwenkbacke 21 zugewandten Stirnseite einen im Querschnitt etwa viertelkreisförmigen Zapfen 23 aufweist, der in einer entsprechenden, viertelkreisförmigen Aussparung 24 der Schwenkbacke 21 angeordnet ist. Ferner sind symbolisch Kraftpfeile F1 und F2 unterschiedlicher Länge dargestellt. Hierbei kennzeichnen die Kraftpfeile F1 diejenigen Richtungen, in denen der Greiffinger 20 zum Halten eines Gegenstandes mit diesem zusammenwirkt. Diese Kraftpfeile F1 sind dabei diejenigen Kraftpfeile, die eine relativ große Länge aufweisen. Ferner erkennt man Kraftpfeile F2 mit gegenüber den Kraftpfeilen F1 verringerter Länge. Diese Kraftpfeile F2 verlaufen entweder in der Längsachse 26 des Greiffingers 20, oder aber in einem Winkelbereich von etwa 120° (bezogen auf eine Ebene senkrecht zur Längsachse 26). Erfolgen Kräfte in Richtung der Kraftpfeile F2, so sind diese nicht zum Greifen des Gegenstandes mittels des Greiffingers 20 erforderlich. Insbesondere kann es sich dabei um Kräfte F handeln, die auftreten, wenn der Greiffinger 20 bzw. der vom Greiffinger 20 gehaltene Gegenstand auf einer Bewegungsbahn der Greifeinrichtung 10 mit einem anderen Gegenstand (oder einer Person) kollidiert.

Erfindungsgemäß ist es vorgesehen, dass die Anordnung des Greiffingers 20 in der Schwenkbacke 21 derart ist, dass bei einer Belastung mit Kräften in Richtung der Kraftpfeile F1 der Greiffinger 20 ortsfest bzw. starr in der Schwenkbacke 21 angeordnet ist. Dies wird insbesondere durch eine formflüssige Verbindung bzw. Anordnung zwischen der Schwenkbacke 21 und dem Greiffinger 20 im Bereich des Zapfens 23 bzw. der Aussparung 24 gelöst.

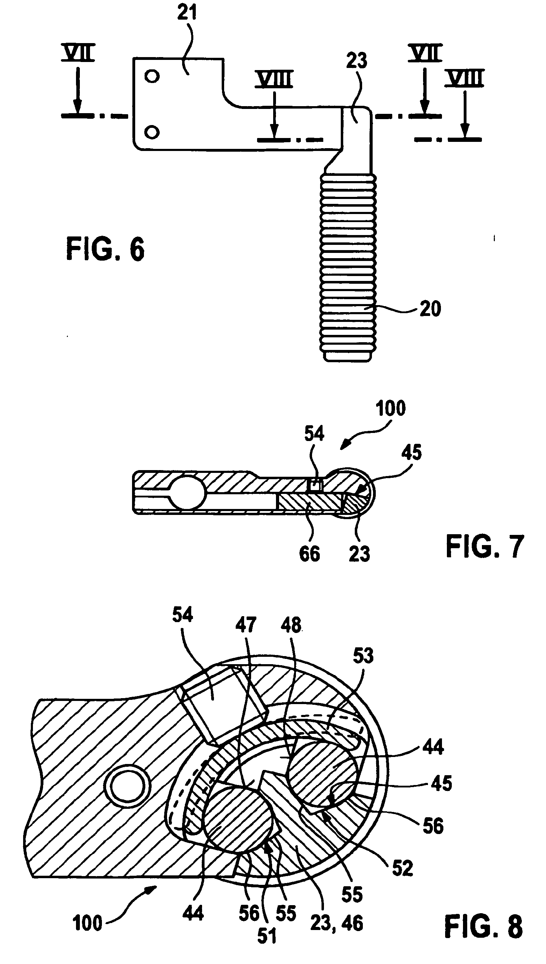

Um ein Ausweichen des Greiffingers 20 zu ermöglichen, falls Kräfte aus Richtung der Kraftpfeile F2 auf den Greiffinger 20 einwirken, weist die Greifeinrichtung 10 eine als Überlastsicherung ausgebildete Schutzeinrichtung 100 auf, deren Aufbau bzw. Wirkungsweise bei einem ersten Ausführungsbeispiel nunmehr anhand der Fig. 6 bis 8 näher erläutert wird. Die Schutzeinrichtung 100 geht dabei von einer vollständigen kraftschlüssigen Aufhängung des Greiffingers 20 an seiner Schwenkbacke 21 aus. Die Ausbildung der Schutzeinrichtung 100 ist daher derart, dass in Abhängigkeit der Richtung der Kräfte F1, F2 unterschiedliche Auslösekräfte für den Greiffinger 20 erzielt werden. Die Schutzeinrichtung 100 sieht vor, dass der Greiffinger 20 lediglich über federnd gelagerte Rastelemente 44 in seiner relativen Position zur Schwenkbacke 21 gehalten wird. Hierbei können die Rastelemente 44 zum Beispiel kugelförmig, oder aber in Form von Walzen ausgebildet sein. Die Schwenkbacke 21 weist eine in etwa rechtwinklige Aussparung 45 auf, in der das als Kreissegment 46 ausgebildete Ende des Zapfens 23 angeordnet ist. In der Aussparung 45 ist für jedes Rastelement 44 eine Ausnehmung 47, 48 ausgebildet. Die Rastelemente 44 greifen in Öffnungen 51, 52 des Zapfens 23 ein, wobei sie durch Federkraft eines Federelements 53, dessen Vorspannkraft durch eine Einstellschraube 54 veränderbar ist, auf schräge Flächen 55, 56 der Öffnungen 51, 52 wirken.

Auf diese Weise bilden die Rastelemente 44 zusammen mit der Geometrie des Zapfens 23 einen Keilmechanismus aus, durch den Kraftkomponenten senkrecht zur Krafteinleitung erzeugt werden. Hierbei ergibt sich die zu überwindende Haltekraft aus der Vorspannkraft durch das Federelement 53 und dem Flankenwinkel der entsprechenden Flächen 55, 56. Zur Abstützung dient das jeweils andere vorgespannte Rastelement 44, welches seine Haltekraft um 90° versetzt in die zugehörige Geometrie des Zapfens 23 einleitet. Die somit gegeneinander arbeitenden Federkräfte heben sich teilweise auf, und es resultiert eine zusammengesetzte Haltekraft, die den Greiffinger 20 in der Aussparung 45 der Schwenkbacke 21 zurückhält.

Ergänzend wird erwähnt, dass für den Fall, dass die Rastelemente 44 als Walzen ausgebildet sind, sich durch die Wahl der Ausrichtung und Endbearbeitung der Rastelemente 44 in eine oder mehrere gewünschte Richtungen eine alternative Auslösekraft bzw. ein Formschluss erzielen lässt. Ebenfalls ist es denkbar, mehrere Rastelemente 44 je Kontaktfläche zu verwenden, welche gegebenenfalls mit unterschiedlichen Kräften vorgespannt sind.

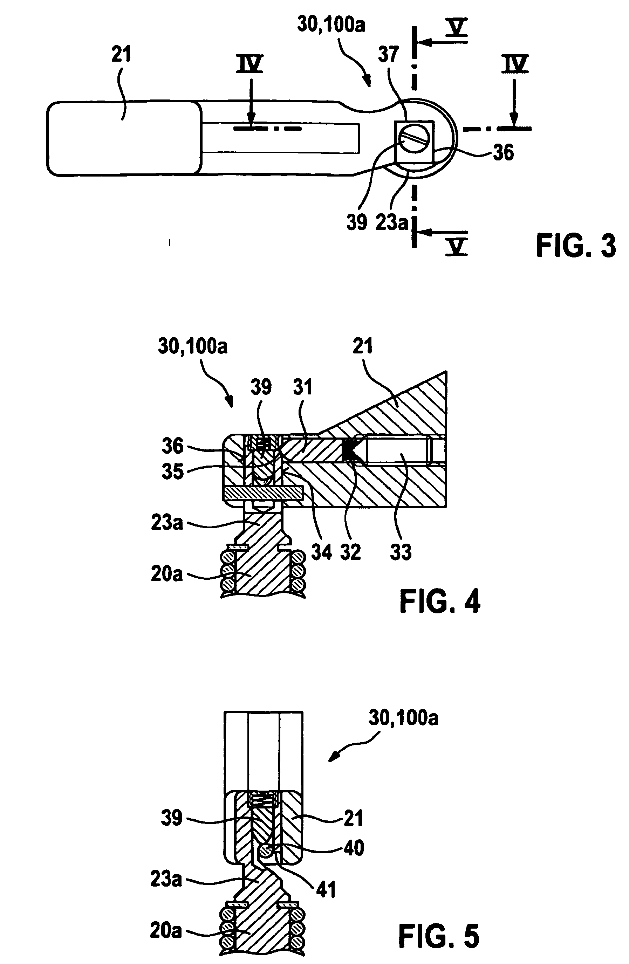

In den Fig. 3 bis 5 ist eine modifizierte Sicherungseinrichtung 100a dargestellt Die Sicherungseinrichtung 100a weist eine kraftschlüssige Rastmechanik 30 mit einem Kegelstift 31 auf, der mittels einer Druckfeder 32 vorgespannt ist, wobei die Vorspannkraft der Druckfeder 32 über eine Anschlagschraube 33 veränderbar ist. Das der Anschlagschraube 33 abgewandte Ende des Kegelstiftes 31 wirkt auf eine ebene Seitenfläche 34 des Zapfens 23a, der dort in eine in der Seitenfläche 34 ausgebildete Rastbohrung 35 eingreift. Dabei stützt sich der Zapfen 23a an einer gegenüberliegenden Seitenfläche 36 einer U-förmigen Aussparung 37 ab. Ein weiterer Kegelstift 39 arbeitet der Haltekraft entgegen, indem er auf einen quer verlaufenden Haltestift 40 drückt. Überschreitet nun diese Federkraft zusammen mit einer aufgrund der in Richtung der Kraftpfeile F2 wirkenden externen Auslösekraft die Haltekraft des Greiffingers 20a in der Aussparung 37, so wird der Greiffinger 20a aus seiner Halterung aktiv heraus beschleunigt. Hierbei sorgt eine hakenförmige Aussparung 41 für den Haltestift 40 für eine seitliche Auswurfbewegung, was einer möglichen Verkantung zwischen einem gelösten Greiffinger 20a und der Schwenkbacke 21 entgegenwirkt

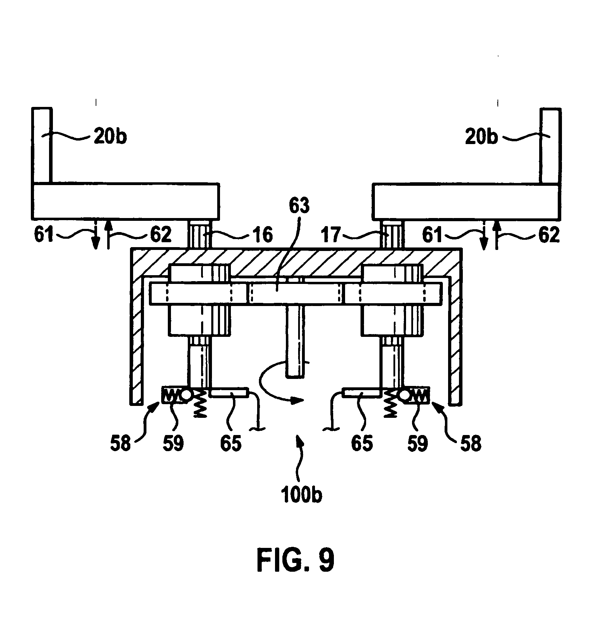

In der Fig. 9 ist eine weitere Schutzeinrichtung 100b dargestellt. Diese kann grundsätzlich, jedoch nicht zwingend, wie die Schutzeinrichtung 100 ausgebildet sein. Bei der Schutzeinrichtung 100b ist es vorgesehen, dass jede der in der Fig. 1 lediglich schematisch dargestellten Antriebswellen 16 bis 18, von denen in der Fig.9 lediglich die beiden Antriebswellen 16 und 17 erkennbar sind, mit einem federbelasteten Druckstück 58 ausgestattet ist. Durch die mittels der Druckfeder 59 des Druckstücks 58 einstellbaren Vorspannkraft lässt sich dabei die Auslösekraft der Schutzeinrichtung 100b einstellen bzw. beeinflussen.

Sobald die Kräfte in Richtung der Pfeile 61, 62, d.h. in Längsrichtung der Antriebswellen 16 bis 18 wirken, kann die betreffende Antriebswelle 16 bis 18 mittels der Schutzeinrichtung 100b außer Eingriff mit dem Druckstück 58 gebracht werden, so dass die entsprechende Antriebswelle 16 bis 18 ggf., aber nicht zwangsläufig außer Wirkverbindung mit dem Antriebszahnrad 63 gerät. Sobald dies jedoch, der Fall ist, ist der betreffende Greiffinger 20b frei beweglich, das heißt, dass er ausweichen kann.

Alternativ kann es auch vorgesehen sein, dass die drei Antriebswellen 16 bis 18 mit einer gemeinsamen Schutzeinrichtung 100b für alle Greiffinger 20b versehen sind (nicht dargestellt), so dass beim Einleiten einer Kraft in Richtung des Pfeils 61, 62 in einen der Greiffinger 20b die Schutzeinrichtung 100b anspricht und alle Greiffinger 20b zum Ausweichen bringt.

Weiterhin ist es bevorzugt vorgesehen, dass ein Sensor 65 bei der Schutzeinrichtung 100b vorgesehen ist, der ein Ansprechen der Schutzeinrichtung 100b erkennt und ein entsprechendes Signal an einer Steuereinrichtung der Greifeinrichtung 10 ausgibt. Dieses Signal bewirkt beispielsweise ein Stoppen des Betriebs der Greifeinrichtung 10 oder ein entsprechendes optisches oder akustisches Warnsignal. Selbstverständlich ist es auch denkbar bzw. vorgesehen, auch die Schutzeinrichtungen 100 und 100a mit entsprechenden Sensoren 65 auszustatten. Hierzu wird beispielhaft auf die Fig.7 verwiesen, in der ein Sensor 66 dargestellt ist, der eine Ausweichbewegung des Greiffingers 20a erfasst.

Die soweit beschriebenen Schutzeinrichtungen 100, 100a und 100b können in vielfältiger Art und Weise abgewandelt bzw. modifiziert werden, ohne vom Erfindungsgedanken abzuweichen. Dieser besteht darin, dass die Schutzeinrichtung 100, 100a und 100b dann anspricht, wenn Kräfte auf die Greiffinger 20, 20a, 20b bzw. die Greifeinrichtung 10 einwirken, deren Richtungen derart sind, dass diese außerhalb der für das Greifen bzw. Halten eines Gegenstands erforderlichen bzw. benötigten Richtungen erfolgen bzw. aber einen bestimmten Kräftebetrag übersteigen.

## Patentansprüche

1. Schutzeinrichtung (100; 100a; 100b) für eine Greifeinrichtung (10) an einer Handhabungsvorrichtung, insbesondere einem Handhabungsroboter, wobei die Greifeinrichtung (10) Greiforgane (20; 20a; 20b), insbesondere in Form von Greiffingern, aufweist, und wobei die Greiforgane (20; 20a; 20b) mittels eines Übertragungsmechanismus (14) bewegbar sind, und mit wenigstens einer Überlastsicherung, die beim Überschreiten einer bestimmten Kraft auf die Greifeinrichtung (10) ein Ausweichen der Greifeinrichtung (10) bewirkt,
**dadurch gekennzeichnet,**
**dass** die als Überlastsicherung ausgebildete Schutzeinrichtung (100; 100a; 100b) bei Kräften (F2) anspricht, die aus einer Richtung erfolgen, die außerhalb einer für das Greifen von Gegenständen erforderlichen Richtung von Kräften (F1) auf die Greiforgane (20; 20a; 20b) wirken.

2. Schutzeinrichtung nach Anspruch 1,
**dadurch gekennzeichnet,**
**dass** jedes der Greiforgane (20; 20a; 20b) eine Überlastsicherung aufweist, und dass die Überlastsicherung als kraftschlüssige Überlastsicherung (30) ausgebildet ist.

3. Schutzeinrichtung nach Anspruch 2,
**dadurch gekennzeichnet,**
**dass** die kraftschlüssige Überlastsicherung (30) wenigstens ein federbelastetes Element (31) umfasst, und dass das Element (31) bei einem Ansprechen der Überlastsicherung (30) zumindest mittelbar eine aktive Bewegung des Greiforgans (20) in seine Ausweichrichtung bewirkt.

4. Schutzeinrichtung nach Anspruch 3,
**dadurch gekennzeichnet,**
**dass** ein Blockieren des Greiforgans (20) in seiner Greifrichtung durch eine formschlüssige Anordnung des Greiforgans (20) in einer Ausnehmung (24) eines das Greiforgan (20) aufnehmenden Trägerelements (21) bewirkt wird.

5. Schutzeinrichtung nach Anspruch 3 oder 4,
**dadurch gekennzeichnet,**
**dass** eine Vorspann- bzw. Auslösekraft auf das Element (31) mittels eines Einstellelements (33) veränderbar ist.

6. Schutzeinrichtung nach Anspruch 2,
**dadurch gekennzeichnet,**
**dass** die Überlastsicherung mehrere Rastelemente (44) aufweist, die in jeweils einer Öffnung (51, 52) des Greiforgans (20a) angeordnet sind, wobei die Rastelemente (44) mit Federkraft wenigstens eines Federelements (53) belastet sind.

7. Schutzeinrichtung nach Anspruch 6,
**dadurch gekennzeichnet,**
**dass** die Rastelemente (44) insgesamt eine Haltekraft auf das Greiforgan (20a) erzeugen.

8. Schutzeinrichtung nach einem der Ansprüche 1 bis 7,
**dadurch gekennzeichnet,**
**dass** der Übertragungsmechanismus (14) für die Greiforgane (20b) wenigstens eine gemeinsame Antriebswelle (16 bis 18) umfasst, und dass eine weitere Überlastsicherung mit einem federbelasteten Element (58) vorgesehen ist, das mit der wenigstens einen gemeinsamen Antriebswelle (16 bis 18) zusammenwirkt, und das ein Ausweichen der wenigstens einen gemeinsamen Antriebswelle (16 bis 18) in Längsrichtung der wenigstens einen gemeinsamen Antriebswelle (16 bis 18) bewirkt.

9. Schutzeinrichtung nach einem der Ansprüche 1 bis 7,
**dadurch gekennzeichnet,**
**dass** der Übertragungsmechanismus (14) für die Greiforgane (20b) für jedes Greiforgan (20b) eine separate Antriebswelle (16 bis 18) umfasst, und dass jeder der separaten Antriebswellen (16 bis 18) eine weitere Überlastsicherung mit einem federbelasteten Element (58) vorgesehen ist, das ein Ausweichen der separaten Antriebswelle (16 bis 18) in deren Längsrichtung bewirkt.

10. Schutzeinrichtung nach einem der Ansprüche 1 bis 9,
**dadurch gekennzeichnet,**
**dass** die Überlastsicherung wenigstens ein Sensorelement (65, 66) aufweist, das beim Ansprechen der Überlastsicherung ein entsprechendes Signal erzeugt.

## Claims

1. Protective device (100; 100a; 100b) for a gripping device (10) on a handling apparatus, in particular a handling robot, wherein the gripping device (10) has gripping members (20; 20a; 20b), in particular in the form of gripping fingers, and wherein the gripping members (20; 20a; 20b) are movable by means of a transmission mechanism (14), and having at least one overload protection means which causes the gripping device (10) to deflect if a particular force on the gripping device (10) is exceeded,
**characterized**
**in that** the protective device (100; 100a; 100b) configured as an overload protection means reacts at forces (F2) which act on the gripping members (20; 20a; 20b) from a direction away from a direction of forces (F1) that is required for gripping articles.

2. Protective device according to Claim 1,
**characterized**
**in that** each of the gripping members (20; 20a; 20b) has an overload protection means, and in that the overload protection means is configured as a force-fitting overload protection means (30).

3. Protective device according to Claim 2,
**characterized**
**in that** the force-fitting overload protection means (30) comprises at least one spring-loaded element (31), and in that the element (31) at least indirectly causes an active movement of the gripping member (20) in its direction of deflection when the overload protection means (30) reacts.

4. Protective device according to Claim 3,
**characterized**
**in that** a form-fitting arrangement of the gripping member (20) in a recess (24) in a carrier element (21) that holds the gripping member (20) causes the gripping member (20) to be blocked in its gripping direction.

5. Protective device according to Claim 3 or 4,
**characterized**
**in that** a pretensioning or release force on the element (31) is variable by means of an adjusting element (33).

6. Protective device according to Claim 2,
**characterized**
**in that** the overload protection means has a plurality of latching elements (44) which are arranged in in each case one opening (51, 52) in the gripping member (20a), wherein the latching elements (44) are subjected to the spring force of at least one spring element (53).

7. Protective device according to Claim 6,
**characterized**
**in that** the latching elements (44) generate as a whole a retaining force on the gripping member (20a).

8. Protective device according to one of Claims 1 to 7,
**characterized**
**in that** the transmission mechanism (14) for the gripping members (20b) comprises at least one common drive shaft (16 to 18), and in that provision is made of a further overload protection means having a spring-loaded element (58) which interacts with the at least one common drive shaft (16 to 18) and which causes the at least one common drive shaft (16 to 18) to deflect in the longitudinal direction of the at least one common drive shaft (16 to 18).

9. Protective device according to one of Claims 1 to 7,
**characterized**
**in that** the transmission mechanism (14) for the gripping members (20b) comprises a separate drive shaft (16 to 18) for each gripping member (20b), and in that provision is made, for each of the separate drive shafts (16 to 18), of a further overload protection means having a spring-loaded element (58) which causes the separate drive shaft (16 to 18) to deflect in the longitudinal direction thereof.

10. Protective device according to one of Claims 1 to 9,
**characterized**
**in that** the overload protection means has at least one sensor element (65, 66) which generates a corresponding signal when the overload protection means reacts.

## Revendications

1. Dispositif de protection (100; 100a; 100b) pour dispositif de saisie (10) prévu sur un ensemble de manutention, en particulier un robot de manutention, le dispositif de saisie (10) présentant des organes de saisie (20; 20a; 20b) en particulier en forme de doigts de saisie, les organes de saisie (20; 20a; 20b) pouvant être déplacés au moyen d'un mécanisme de transfert (14), et présentant au moins une protection contre les surcharges qui ont pour effet que le dispositif de saisie (10) est desserré lorsqu'une force définie est dépassée sur le dispositif de saisie (10),
**caractérisé en ce que**
le dispositif de protection (100; 100a; 100b) configuré comme protection contre les surcharges réagit à des forces (F2) qui agissent sur les organes de saisie (20; 20a; 20b) dans une direction située hors de la direction de forces (F1) nécessaires pour la saisie d'objets.

2. Dispositif de protection selon la revendication 1, **caractérisé en ce que** chacun des organes de saisie (20; 20a; 20b) présente une protection contre les surcharges et **en ce que** la protection contre les surcharges est configurée comme protection (30) contre les surcharges en correspondance mécanique.

3. Dispositif de protection selon la revendication 2, **caractérisé en ce que** la protection (30) contre les surcharges en correspondance mécanique comporte au moins un élément (31) sollicité par ressort et **en ce que** lorsque la protection (30) contre les surcharges réagit, l'élément (31) a pour effet au moins directement un déplacement actif de l'organe de saisie (20) dans la direction de son desserrement.

4. Dispositif de protection selon la revendication 3, **caractérisé en ce qu'**un blocage de l'organe de saisie (20) dans sa direction de saisie est réalisé par un agencement en correspondance géométrique de l'organe de saisie (20) dans un logement (24) d'un élément de support (21) qui reprend l'organe de saisie (20).

5. Dispositif de protection selon les revendications 3 ou 4, **caractérisé en ce que** la force de précontrainte ou de déclenchement qui agit sur l'élément (31) peut être modifiée au moyen d'un élément d'ajustement (33).

6. Dispositif de protection selon la revendication 2, **caractérisé en ce que** la protection contre les surcharges présente plusieurs éléments d'encliquetage (44) disposés chacun dans une ouverture (51, 52) de l'organe de saisie (20a), les éléments d'encliquetage (44) pouvant être sollicités par la force élastique d'au moins un élément élastique (53).

7. Dispositif de protection selon la revendication 6, **caractérisé en ce que** les éléments d'encliquetage (44) exercent globalement une force de maintien sur l'organe de saisie (20a).

8. Dispositif de protection selon l'une des revendications 1 à 7, **caractérisé en ce que** le mécanisme de transfert (14) des organes de saisie (20b) comporte au moins un arbre d'entraînement (16 à 18) commun et **en ce qu'**une autre protection contre les surcharges dotée d'un élément (58) sollicité par ressort est prévue, l'élément sollicité par ressort coopérant avec le ou les arbres d'entraînement (16 à 18) communs et ayant pour effet un desserrement du ou des arbres d'entraînement (16 à 18) communs dans le sens de la longueur du ou des arbres d'entraînement (16 à 18) communs.

9. Dispositif de protection selon l'une des revendications 1 à 7, **caractérisé en ce que** le mécanisme de transfert (14) pour les organes de saisie (20b) comporte pour chaque organe de saisie (20b) un arbre d'entraînement (16 à 18) distinct et **en ce qu'**une autre protection contre les surcharges dotée d'un élément (58) sollicité par ressort qui a pour effet un desserrement de l'arbre d'entraînement (16 à 18) distinct dans le sens de sa longueur est prévu pour chacun des arbres d'entraînement (16 à 18) distincts.

10. Dispositif de protection selon l'une des revendications 1 à 9, **caractérisé en ce que** la protection contre les surcharges présente au moins un élément de capteur (65, 66) qui délivre un signal qui correspond à la réaction de la protection contre les surcharges.
